# EUROPEAN PATENT APPLICATION

(11) **EP 4 596 927 A1**
(43) Date of publication of application: **06.08.2025**
(21) Application number: 24155843.6
(22) Date of filing: 05.02.2024
(51) Int. Cl.: F16K 1/22, F16K 31/53, F16K 31/04, B64D 15/06

(54) **VALVE SYSTEM**

(71) Applicant: Microtecnica S.r.l., 10126 Turin (IT)
(72) Inventor: MORNACCHI, Andrea, Torino TO, 10126 (IT); MANTIA, Elio, Torino TO, 10040 (IT); SALVATORIELLO, Gianfranco, Torino TO, 10126 (IT); SERRICCHIO, Vincenzo, Torino TO, 10141 (IT); CANTATORE, Francesca, Torino TO, 10123 (IT)
(74) Representative: Dehns

(57) **Abstract**

A valve system (1) of an aircraft, including a valve member (2) in a conduit (4) of an aircraft. The valve member (2) is coupled to an actuation shaft (6). An electric motor (8) is arranged to apply a torque to the actuation shaft (6). A torsional spring (10) is coupled to the actuation shaft (6) and is configured to apply a torque to bias the valve member (2) open.

## Description

### FIELD

The examples described herein relate to a valve system of an aircraft, in particular to a valve system including a torsional spring that is configured to provide a torque to a valve member.

### BACKGROUND

Valve systems are designed to regulate pressure or flow rate in a fluid system and may be used in the environmental control systems of aircraft and engine pneumatic systems, e.g. anti-ice and start bleed. Increasingly, there is demand for electrically powered and controlled systems in order to save weight in aircraft; however, the behaviour of the valve systems must be predictable, particularly when electrical power is lost.

It is desired to provide an improved valve system that has a reliable behaviour, so to control the safety of environmental control system and thus flight safety.

### SUMMARY

In accordance with an aspect of the disclosure, there is provided a valve system of an aircraft, the valve system comprising:
a valve member in a conduit of an aircraft;
   wherein the valve member is coupled to an actuation shaft;
an electric motor arranged to apply a torque to the actuation shaft; and
a torsional spring coupled to the actuation shaft;
   wherein the torsional spring is arranged to apply a torque to bias the valve member open.

Also according to the present disclosure, there is provided a method for operating a valve system of an aircraft, wherein the valve system comprises:
a valve member coupled to an actuation shaft in a conduit of an aircraft;
an electric motor; and
a torsional spring coupled to the actuation shaft;
the method comprising:
the electric motor applying a torque to the actuation shaft; and
the torsional spring applying a torque to bias the valve member open.

It will be appreciated that all of the features described herein relating to the valve system apply equally to the method for operating assembling the valve system, and vice versa.

The valve member is arranged to control the flow of fluid through the conduit. The electric motor is arranged to apply a torque to the actuation shaft. By applying a torque to the actuation shaft with the electric motor, the actuation shaft may rotate. By coupling the valve member to the actuation shaft and the actuation shaft, the electric motor may alter the position of the valve member, in turn controlling the flow or the pressure of fluid through the conduit. The electric motor may therefore be used to control the flow or the pressure of fluid through the conduit. In some examples, the valve system may be in an environmental control system of an aircraft, for example, the anti-icing system.

In some examples, the valve system has a failsafe condition. The failsafe condition is, for example, the state in which the valve member is arranged to be placed in, in the event of a failure or error in the operation of (e.g. a component of) the valve system. This may, for example, be in the event that the electric motor is no longer able to apply a torque via the actuation shaft to the valve member. This may be owing to the electric motor no longer being able to apply an torque to the actuation shaft, the electric motor no longer receiving power, or any other way in which the electric motor is no longer able to apply torque to alter the position of the valve member. In some examples, the failsafe condition comprises the valve member being biased open.

In some examples, the torsional spring is configured to provide a sufficiently large torque for the valve system to achieve the failsafe condition. In some examples, the torsional spring is arranged to provide a greater magnitude of torque to the actuation shaft than a passive resistance, wherein the passive resistance is the torque resulting from friction in the system, the resistance of the electric motor in an off condition and an aerodynamic torque generated by fluid flowing through the conduit. The torque from the torsional spring may assist to reduce the resultant torque on the valve member. By reducing the resultant torque on the valve member, a smaller motor may be used to actuate the valve member and may lead to further weight and energy savings. By reducing the resultant torque on the valve member, more accurate control of the position of the valve member may be achieved. The use of a torsional spring to apply a torque to a valve member may assist to reduce mass compared to pneumatically actuated valve systems.

In some examples, the torque provided by the torsional spring to the actuation shaft is in the range of 0.1 to 100 Nm, for example 1 to 20 Nm, for example approximately 10 Nm.

In some examples, the valve member is a butterfly valve. The butterfly valve may be arranged such that when fluid flows over the butterfly valve, an aerodynamic torque acts on the valve member to bias the valve closed.

In some examples, the valve system is in an environmental control system of the aircraft. In some examples, the valve system is in an anti-icing system of the aircraft.

In some examples, the electric motor is coupled to the actuation shaft using a gearbox. By using a gearbox, the valve system may be adapted to meet other design and operational requirements for the valve system, for example, dimensional constraints of the valve system, or power consumption constraints of the electric motor. By using a gearbox and a torsional spring to apply a torque to the actuation shaft there may be reduced backlash between gears in the gearbox.

In some examples, the electric motor is arranged to directly drive the actuation shaft. By directly driving the actuation shaft with an electric motor, the complexity of the valve system may be reduced.

In some examples, the torsional spring is arranged coaxially with the actuation shaft. By arranging the torsional spring coaxially with the actuation shaft, the dimensions of the valve system may be reduced.

In some examples, a position sensor is arranged to detect the rotational position of the actuation shaft. By using a position sensor to detect the rotation of the actuation shaft, the condition (e.g. position) of the valve member and in turn the flow or the pressure of fluid through the conduit may be determined.

In some examples, the position sensor is coupled to the electric motor. By coupling the position sensor to the electric motor, the electric motor may control the flow or the pressure of fluid through the conduit based on the condition measured by the position sensor.

In some examples, the valve member comprises a sealing component arranged circumferential to the valve member, wherein the sealing component is configured to reduce the flow through the conduit when the valve member is biased closed. The sealing component may be an O-ring, gasket or any other type of suitable sealing component.

In some examples, the longitudinal axis of the conduit is substantially non-perpendicular to the longitudinal axis of the actuation shaft. For example, the longitudinal axis of the conduit may be arranged in the range of 85 degrees to 45 degrees, for example 80 degrees to 60 degrees, for example approximately 75 degrees to the longitudinal axis of the actuation shaft. By arranging the conduit and actuation shaft in a non-perpendicular orientation, a more reliable seal between the valve member and conduit may be achieved when the valve member is biased closed.

In some examples, the actuation shaft is coupled to a first flange surface configured to contact a first stop when the valve member is biased open, wherein the first flange surface comprises a surface projecting (e.g. radially) from the actuation shaft. In some examples, the first flange surface is integral with the actuation shaft. By configuring the first flange surface and the first stop to contact when the valve member is biased open, a maximum open condition is given for the valve member.

The first stop may be provided in any suitable way. In some examples, the first stop may be offset radially from the actuation shaft. In some examples, the first stop is coupled to a housing of the valve system.

In some examples, the actuation shaft is coupled to a second flange surface configured to contact a second stop when the valve member is biased closed, wherein a second flange surface comprises a surface projecting (e.g. radially) from the actuation shaft. In some examples, the second flange surface is integral with the actuation shaft. In some examples, the first flange surface and the second flange surface may be surfaces of a single component. By configuring the second flange surface and the second stop to contact when the valve member is biased closed, a maximum closed condition is given for the valve member.

The second stop may be provided in any suitable way. In some examples, the second stop may be offset radially from the actuation shaft. In some examples, the second stop is coupled to the housing of the valve system.

In some examples, the position of the second stop is adjustable. By adjusting the position of the second stop, the position of the actuation shaft in the maximum closed condition may be changed.

In some examples, the second stop is threaded and coupled to a threaded insert. By using a threading on the second stop that couples to a threaded insert the position of the second stop, the position of the actuation shaft in maximum closed condition may be adjusted.

In some examples, the electric motor is arranged to apply torque to the actuation shaft in either direction. In some other examples, the electric motor is configured to apply torque to the actuation shaft in the direction to bias the valve member open. By using the electric motor that may only apply a torque to the actuation shaft to bias the valve member open, the aerodynamic torque generated by the flow of fluid over the valve member through the conduit may be used to torque the valve member closed.

### BRIEF DESCRIPTION OF THE DRAWINGS

One or more non-limiting examples will now be described, by way of example only, and with reference to the accompanying figures in which:
Figure 1 shows a cross-sectional view of a valve system;
Figure 2 shows a cross-sectional view a conduit and a valve member of a valve system; and
Figure 3 shows a cross-sectional view of a gear box of a valve system.

### DETAILED DESCRIPTION

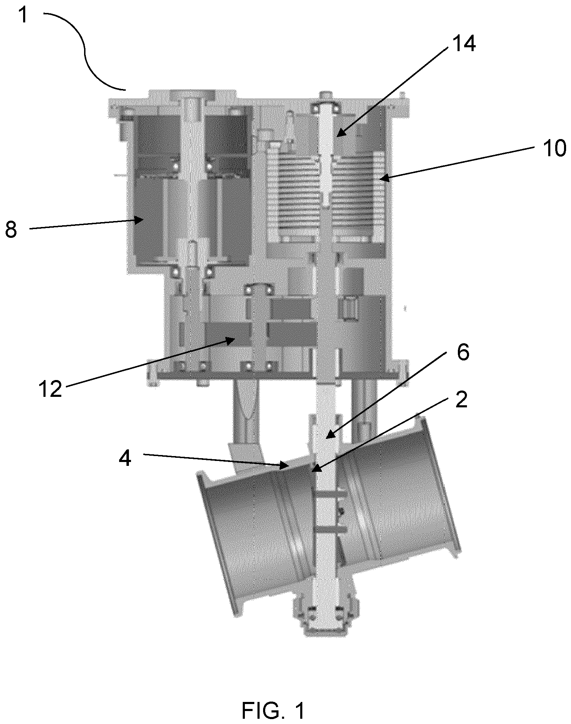

Figure 1 depicts a side-on view of a valve system 1 of an aircraft in accordance with an example of the disclosure. The valve system 1 has a valve member 2 that regulates the flow or pressure of fluid through a conduit 4 of an aircraft system. The valve system 1 includes an actuation shaft 6 that is coupled to the valve member 2, and an electric motor 8 that is coupled to the actuation shaft 6. The valve system 1 includes a torsional spring 10, that is coupled to the actuation shaft 6. In some examples, the valve member 2 is a butterfly valve.

The electric motor 8 is arranged to control the position of the valve member 2 and in turn flow or pressure of fluid through the conduit 4 by providing a torque to the actuation shaft 6. The torsional spring 10 provides a torque to the actuation shaft 6.

When fluid flows through the conduit 4, an aerodynamic torque is generated as the fluid passes over the valve member 2. The aerodynamic torque may bias the valve member 2 closed, wherein closed is defined as a state in which fluid is substantially obstructed from flowing through the conduit 4. The torsional spring 10, is coupled to the actuation shaft 6 such that the torque it applies to the actuation shaft 6 is in the direction towards the valve member 2 biased open, wherein open is defined as a state in which fluid may flow substantially unobstructed through the conduit 4.

In the event of a failure or error in the operation of (e.g. a component of) the valve system 1, the torque provided by the torsional spring 10 is greater than the sum of the aerodynamic torque and the resistive torque of the valve system 1, known as the passive resistance. The resistive torque is defined as the additional torque caused on the valve member 2 and actuation shaft 6 by other forces in the valve system 1, for example, the electromagnetic forces in the electric motor 8 being in the off condition and other frictional forces between gears and bushings in the valve system 1. The resistive torque acts in the direction against the resultant torque on the actuation shaft 6 and valve member 2. As such, in order to achieve the failsafe condition, the torsional spring 10 applies a torque greater than and in the opposite direction to the maximum passive resistance. This may allow the valve system 1 to passively enter the failsafe condition of the valve member 2 biased open.

The torque provided by the torsional spring 10 to the actuation shaft 6 may be in the range of 0.1 to 100 Nm, for example, 1 to 20 Nm, for example, 10 Nm.

A gearbox 12 may be coupled to the electric motor 8 and the actuation shaft 6. By using a gearbox 12 between the electric motor 8 and the actuation shaft 6, the valve system 1 may be adapted to meet other design requirements and operational requirements of the valve system 1, for example, dimensional constraints of the valve system 1 or power consumption of the electric motor 8.

A position sensor 14 may be provided and may detect the rotational position of the actuation shaft 6. By using the position sensor 14 to detect the rotational position of the actuation shaft 6, the condition of the valve member 2 and in turn flow or the pressure of fluid through the conduit 4 may be determined. The position sensor 14 may be coupled to the electric motor 8. By coupling the position sensor 14 to the electric motor 8, the flow or the pressure of fluid through the conduit 4 may be controlled and changed based on the condition measured by the position sensor 14.

The longitudinal axis of the actuation shaft 6 is arranged to be substantially non-perpendicular to the longitudinal axis of the conduit 4. For example, the longitudinal axis of the conduit may be arranged in the range of 85 degrees to 45 degrees, for example, 80 degrees to 60 degrees, for example, or 75 degrees, to the longitudinal axis of the actuation shaft. By arranging the actuation shaft 6 and the conduit 4 to be non-perpendicular, the valve member 2 coupled to the actuation shaft 6 may be non-perpendicular to the conduit 4. This may allow a condition in which fluid flow is substantially interrupted in the conduit 4 when the valve member 2 is biased closed.

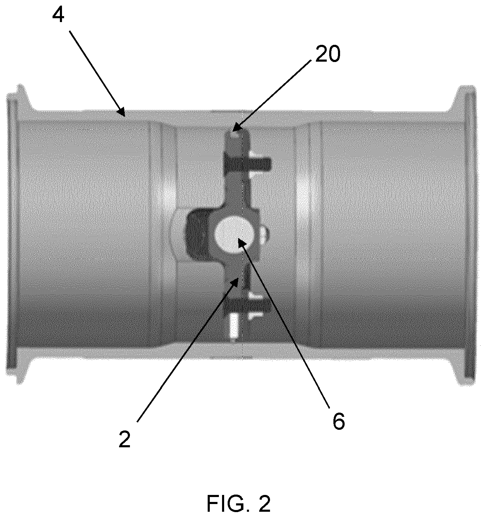

Figure 2 depicts a cross-section of the conduit 4 in the plane perpendicular to the longitudinal axis of the actuation shaft 6. A sealing component 20 may be arranged circumferential to the valve member 2 in order to provide an improved seal around the valve member 2 when the valve member is biased closed. The sealing component 20 may be an O-ring, gasket or any other type of suitable sealing component.

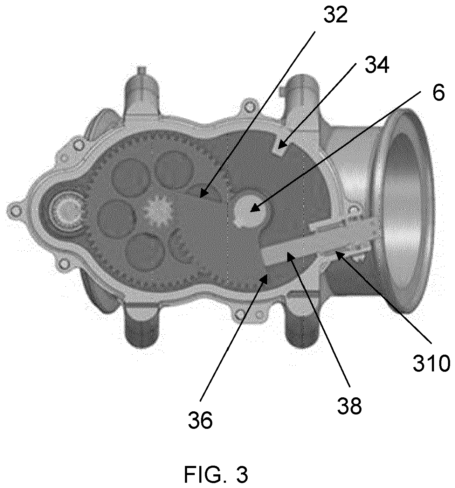

Figure 3 depicts a cross-section of the valve system 1 in the plane perpendicular to the longitudinal axis of the actuation shaft 6. A first flange surface 32 is configured to contact a first stop 34 when the valve member 2 is biased open. By configuring the first flange surface 32 to contact a first stop 34, a maximum open condition of the valve member 2 may be achieved. A second flange surface 36 is configured to contact a second stop 38 when the valve member 2 is biased closed. By configuring the second flange surface 36 to contact the second stop 38, a maximum close condition of the valve member 2 may be achieved.

The first flange surface 32 may be integral to the actuation shaft 6. The second flange surface 36 may be integral to the actuation shaft 6. The first flange surface 32 and second flange surface 36 may be surfaces of a single component.

The first stop 34 may be coupled to the housing of the valve system 1. The second stop 38 may be coupled to the housing of the valve system 1.

The position of the second stop 38 may be adjustable in order to vary the position of the valve member 2 when it is biased closed. By varying the position of the valve member 2 when biased closed, a condition in which fluid is substantially obstructed from flowing through the conduit 4 may be achieved, for example, if wear in the system causes the orientation of the valve member 2 when biased closed to deviate over time.

The position of the second stop 38 may be adjusted using a threaded insert 310. By using a threaded second stop 38 and a threaded insert 310 coupled to the housing of the valve system 1, rotation of the second stop 38 may adjust the position of the second stop 38 and may change the position at which the second flange surface contacts 36 the second stop 38. This may change the position of the valve member 2 when biased closed and may achieve a condition in which fluid is substantially obstructed from flowing through the conduit 4.

In some examples, it will be appreciated that an advantage of using a torsional spring 10 to provide a torque to an actuation shaft 6 may be to achieve a failsafe mode of operation for the valve system 1. By providing a torque greater than the maximum passive resistance, the valve member 2 may be biased open towards a failsafe condition in the event of a failure or error in the operation of (e.g. of a component in) the valve system 1. Further, by providing a torque biasing the valve member 2 open, a reduced torque may be required to be provided by the electric motor 8 in order to operate the valve system 1 and a smaller electric motor 8 may be used. It will also be appreciated that in applying a torque using the torsional spring 10 to the actuation shaft 6, more accurate control of the valve member 2 and flow or pressure of fluid through the conduit 4 may be achieved as backlash in the gearbox 12 may be reduced.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. A valve system of an aircraft, the valve system comprising:
a valve member in a conduit of an aircraft;
wherein the valve member is coupled to an actuation shaft;
an electric motor arranged to apply a torque to the actuation shaft; and
a torsional spring coupled to the actuation shaft;
wherein the torsional spring is configured to apply a torque to bias the valve member open.

2. The valve system as claimed in claim 1, wherein the valve system has a failsafe condition of the valve member biased open;
wherein the failsafe condition is the state in which the valve member is arranged to be placed in, in the event of a failure or error in the operation of the valve system.

3. The valve system as claimed in claim 1 or 2, wherein the torsional spring provides a greater magnitude of torque to the actuation shaft than a passive resistance;
wherein the passive resistance is the torque resulting from the resistance of the electric motor in an off condition and an aerodynamic torque generated by fluid flowing through the conduit.

4. The valve system as claimed in claim 1, 2 or 3, wherein the electric motor is coupled to the actuation shaft using a gearbox.

5. The valve system as claimed in any one of the preceding claims, wherein the valve system comprises a position sensor arranged to detect a rotational position of the actuation shaft.

6. The valve system as claimed in any one of the preceding claims, wherein the longitudinal axis of the conduit is arranged to be substantially non-perpendicular to the longitudinal axis of the actuation shaft.

7. The valve system as claimed in any one of the preceding claims, wherein the valve member comprises a sealing component arranged circumferential to the valve member;
wherein the sealing component is configured to reduce flow through the conduit when the valve member is biased closed.

8. The valve system as claimed in any one of the preceding claims, wherein the actuation shaft comprises a first flange surface configured to contact a first stop when the valve member is biased open;
wherein the first flange surface comprises a surface projecting from the actuation shaft.

9. The valve system as claimed in any one of the preceding claims, wherein the actuation shaft comprises a second flange configured to contact a second stop when the valve member is biased closed;
wherein the second flange surface comprises a surface projecting from the actuation shaft.

10. The valve system as claimed in claim 9, wherein the position of the second stop is adjustable.

11. The valve system as claimed in claim 10, wherein the second stop is threaded and is coupled to a threaded insert.

12. The valve system as claimed in any one of claims 1 to 7, wherein the actuation shaft comprises a first flange surface configured to contact a first stop when the valve member is biased open; and
wherein the actuation shaft comprises a second flange configured to contact a second stop when the valve member is biased closed;
wherein the first flange surface and the second flange surface each comprise a surface projecting from the actuation shaft and are surfaces of a single component.

13. The valve system as claimed in any one of the preceding claims, wherein the valve system is provided in an anti-icing system of an aircraft.

14. A method for operating a valve system of an aircraft, wherein the valve system comprises:
a valve member coupled to an actuation shaft in a conduit of an aircraft;
an electric motor; and
a torsional spring coupled to the actuation shaft;
the method comprising:
the electric motor applying a torque to the actuation shaft; and
the torsional spring applying a torque to bias the valve member open.

15. The method of operating a valve system of claim 14, wherein in the event of failure or error of the valve system, the torsional spring provides a sufficiently large torque to achieve the failsafe condition.
